# EUROPEAN PATENT APPLICATION

(11) **EP 3 992 736 A1**
(43) Date of publication of application: **04.05.2022**
(21) Application number: 20204475.6
(22) Date of filing: 28.10.2020
(51) Int. Cl.: G05B 19/409, G05B 19/418

(54) **A METHOD FOR PROVIDING A CONTROLLING FRONTEND FOR AN OPERATING DEVICE**

(71) Applicant: ABB Schweiz AG, 5400 Baden (CH)
(72) Inventor: BRAUN, Roland, 53859 Niederkassel Lülsdorf (DE); MENDOZA, Francisco, 69198 Schriesheim (DE); MERLIN, Tilo, 63589 Linsengericht (DE); GAMER, Thomas, 68782 Brühl (DE); HOERNICKE, Mario, 76829 Landau (DE)
(74) Representative: Maiwald Patent- und Rechtsanwaltsgesellschaft mbH

(57) **Abstract**

The invention relates to the field of industrial system automation, particularly for accessing and/or controlling field devices (30) by means of a controlling frontend (10). A method for providing a controlling frontend (10) for an operating device (40) configured for operating a field device (30) comprises steps of:
providing an operational frame (14), wherein the operational frame (14) is based on a companion specification;
reading a field device specification (24) from a database (50), wherein the field device specification (24) comprises a structured set of field device attributes (22), which are related to the operating elements (32); and
generating, based on the field device specification (24) and the operational frame (14), a structured set of display elements (12) for the controlling frontend (10), wherein at least some of the display elements (12) of the controlling frontend (10) are connected to the operating elements (32) of the field device (30).

## Description

### Field of the Invention

The invention relates to the field of industrial system automation, particularly for accessing and/or controlling field devices. The invention further relates to an aggregation server, to a use, to a program element, and to a computer-readable storage medium.

### Background

In at least some industrial automation systems, a plethora of field devices needs to be controlled or managed. There may exist specifications of at least some of the field devices. However, interaction with the field devices in at least some cases may rely on ad-hoc solutions, which may be error-prone and/or cumbersome.

### Description

It is an objective of the invention to provide improved usability means for controlling or managing field devices. This objective is achieved by the subject-matter of the independent claims. Further embodiments are evident from the dependent claims and the following description.

One aspect relates to a method for providing a controlling frontend for an operating device configured for operating a field device by means of operating elements of the field device. The method comprises the steps of:
providing an operational frame, wherein the operational frame is based on a companion specification;
reading a field device specification from a database, wherein the field device specification comprises a structured set of field device attributes, which are related to the operating elements; and
generating, based on the field device specification and the operational frame, a structured set of display elements for the controlling frontend,
wherein at least some of the display elements of the controlling frontend are connected to the operating elements of the field device.

A field device may be any device that is part of and/or is used in an industrial automation system. In at least some automation systems, the field device is controlled, steered or operated by an operating device. The operating device may be a mobile device, for instance a tablet or smartphone, it may be a server in a control centre, and/or another computing device. The operating device may perform the control by a controlling frontend, which may be implemented as a specialized program, e.g. as a so-called "app", and/or a web-based program, e.g. a script, a plug-in and/or a web-client. The controlling frontend may sometimes be called an operating frontend, a management frontend, or an OAM frontend (OAM: Operation, Administration and Maintenance). The controlling frontend may comprise operating elements, e.g. depicted as "control boxes" on a display of the operating device. For instance, tapping or otherwise activating one of the operating elements may start an electric motor, other operating elements may stop the motor, initiate a temperature measurement, and/or other actions.

The operational frame may be based on a companion specification and/or generated from the companion specification. The operational frame may serve as a "basic" or "generic" user interface for the controlling frontend. The companion specification may comprise specified information models, for instance PA-DIM (Process Automation - Device Information Model) according to OPC 30081 or DI (Device Integration) according to OPC 10000-100, particularly Part 100: Device Information Model. The companion specification may at least comprise a part of the information required to infer a structure of an HMI (Human Machine Interface). Said information may comprise device parameters' metadata, methods and their functional coherence, company-specifics and/or may be based on a companion specification, e.g. a preferred "company colour", etc. The information may be used to control, e.g., a rendering process regarding layout and graphical styles, such as fonts, colours, etc. Said information may be enriched, e.g. by a position and/or size of the operating elements, and/or further data. For instance, FunctionalGroups specified in the DI model may be used to structure user menus. A FunctionalGroup may define a functional coherence between device's parameters, methods and other functional groups.

For an information of the components and/or operating elements of the field device that are to be controlled, a field device specification from a database may be read. The field device specification may comprise a structured set of field device attributes, which are related at least to the operating elements. The structured set may be structured hierarchically and/or otherwise, e.g. as tupels. The field device specification may comprise standardized information models, e.g. specified in OPC UA companion specification like PA-DIM (OPC 30081) or DI (OPC 10000-100). The database may be localized on one or more devices, e.g. on a server, on the operating device, on the field device, and/or other computing devices. Particularly, the database may be localized on and/or derived from an aggregation server, e.g. an OPC UA Aggregating Service (OPC: Open Platform Communications, UA: Unified Architecture), e.g. as an aggregated OPC UA Server instance. In the context of Modular Automation, an aggregating OPC UA Server may be used to integrate the Modules of an Automation System into a common Address Space. The Modules of an Automation System implement the OPC UA Servers (Aggregates). Additionally, the companion specifications may provide standard interfaces between OPC UA connected applications. The specifications may be inferred from information models. The specifications may include a cascaded approach that allows OPC UA Server Instance specific extensions on top of the Information Model based Ul configuration rules. The field device attributes may, for example, comprise sensors, actuators, static properties like a serial number of the device, and/or other entries.

The field device specification, the operational frame, and/or further information may be used to generate a structured set of display elements for the controlling frontend. This may be structured to a "user menu" and/or a set of menus. The display elements may serve for displaying data, e.g. sensor data or data of the field device's properties, for steering an actuator, and/or further information. A hierarchically structured specification may be used as a basis for generating boxes, whose activation opens an access to a "next level menu". The generating may comprise an x/y location, width/height, colour, etc. of each display element, either specified or generated, e.g., by a graph generator. The display elements may be activated, e.g. by a click, touch, hover, entering letters, and/or by further inputs, e.g. inputs as defined as "JavaScript events". Activating the display elements may lead to an action, for instance to open a sub-window and/or a user dialog, to display and/or update current sensor data, to steer an actuator, etc. At least some of the display elements of the controlling frontend are connected to the operating elements of the field device and, thus, lead to an action on the field device and/or contribute to operating the field device. Being connected may comprise to be logically and/or physically connected to the field device. Being connected to the operating elements of the field device may be implemented by a communication protocol, e.g. based on wireless and/or wired connection means.

Particularly, the method provides an automated, rule based "View Model" Generator, which is able to operate a field device. The View Model may be understood as a sort of an intermediate layer between the View (HMI) and the Model (Data). The View Model may prepare and/or convert data to simplify the visualization. This may close a gap in the usability of OPC UA connected filed devices, because the actions that can be run by the controlling frontend are consistent to its specification(s). This may a flexible and consistent device integration concept, particularly for field devices. The method may contribute to a scalable diagnostic and visualization approach. Further, it may address needs like user-friendly configuration, monitoring, and/or further OAM tasks (OAM: Operation, Administration and Maintenance). The method may be applied to various types of applications, web-clients, and/or other program modules. The method opens means for an applicability across vendors and technologies. On the other hand, this may allow OPC UA Server Instance specific extensions. Additionally or as an alternative, the usability services in some cases may be limited to providing a simple WEB API (such as RESTful services) to web clients, which in turn implement the user dialogs.

In various embodiments, the operating elements are at least one of: a sensor, an actuator, and/or a register entry. The register entry may comprise static data like a serial number, and/or data like diagnostic data.

In various embodiments, the operational frame and/or the companion specification comprises a specification of a layout and/or of a graphical style of the display elements. For instance, fonts, colours, and/or further elements may be provided that improve the usability.

In some embodiments, the display elements are hierarchically structured. This may be a structured basis to cope with the control even of complicated field device.

In some embodiments, the address space of the device is compliant with a companion specification according to OPC 30081, OPC 10000-100, OPC Unified Architecture for IEC61850, MDIS OPC UA Companion Specification, OPC Unified Architecture for Analyzer Devices (ADI) and/or another companion specification and/or is compliant with an aggregated service. The aggregated service may enable a common point of access for at least some of the devices, in some embodiments even for all the devices, of an industrial automation system. The standard compliance, further, provides a standardized approach, thus contributing to improved specifications and/or to (better) interoperability among several systems.

In various embodiments, the at least a part of the field device specification and/or the field device attributes is compliant with a Unified Architecture of Open Platform Communications, OPC UA.

In various embodiments, activating one of the display elements is related to a display element action, wherein the display element action comprises at least one of: displaying a sub-menu, steering an operating element of the field device, performing an authentication, and/or performing a NOP-operation (NOP: no operation).

The activating may depend on the kind of display, e.g. touch on devices with a touch-pad, click or hover on mouse-based devices, and/or further inputs. A sub-menu or sub-window, may particularly be used for hierarchically structured display elements. The steering may comprise, e.g., activating an actuator, displaying and/or updating current sensor data, re-reading and/or writing a register entry, and/or further ones. The NOP-operation may be used when an action does not make sense, e.g. when activating a display element "serial number", where (e.g.) an updating does not bring another result.

In some embodiments, the display elements of the controlling frontend being connected to the operating elements of the field device requires an authorization of the controlling frontend and/or of the operating device. This may provide a protection against unsolicited access to the field device.

In some embodiments, the operating device is a smartphone, tablet, a laptop, a specialized device, and/or another type of mobile device, a stationary device, and/or a server. The stationary device may, e.g., be a desktop computer, a server, e.g. in a cloud. This opens the method to a broad range of devices to run on.

In various embodiments, the database is located on the field device, on the operating device, on a server, and/or on an aggregation server. The Aggregation Server and/or or Aggregation Service may be compliant to OPC UA.

An aspect relates to a program element and/or computer program product comprising instructions, which, when the program is executed by a computer, cause the computer to carry out the method as described above and/or below.

An aspect relates to a computer-readable storage medium where a computer program or a computer program product as described above is stored on.

An aspect relates to an aggregation server, configured for aggregating information of a plurality of a field devices, wherein the information comprises a structured set of field device attributes and usability services for the field devices.

In some embodiments, the aggregation server is compliant with IEC 62541.1.

An aspect relates to a use of a method as described above and/or below for steering field devices of an industrial automation system and/or for providing a controlling frontend for the field devices.

For further clarification, the invention is described by means of embodiments shown in the figures. These embodiments are to be considered as examples only, but not as limiting.

### Brief Description of the Drawings

The drawings depict:
- **Fig. 1**: schematically an example for operating a field device according to an embodiment;
- **Fig. 2**: schematically an example for providing a controlling frontend according to an embodiment;
- **Fig. 3**: schematically an example for an aggregating service according to an embodiment;
- **Fig. 4a** to **4c**: schematically an example for an aggregated user interface according to an embodiment;
- **Fig. 5**: a flow diagram according to an embodiment.

### Detailed Description of Embodiments

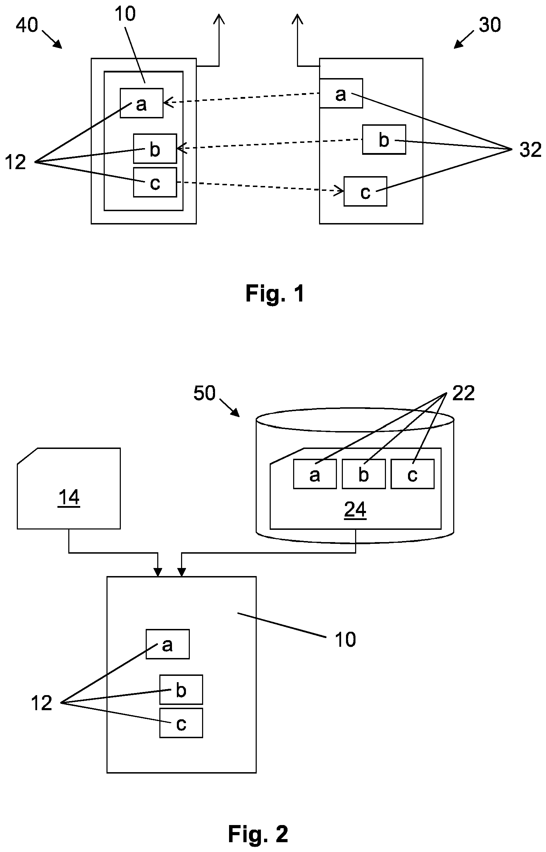

**Fig. 1** shows schematically an example for operating a field device 30 according to an embodiment. The field device 30 has three operating elements 32, marked as a, b, c. Operating element a may be a sensor, e.g. for temperature, operating element b may be an internal register, e.g. for serial number, current firmware version, and/or other data of field device 30. Operating element c may be an actuator, for example a valve element. The field device 30 is operated by an operating device 40, by means of a controlling frontend 10. The controlling frontend 10 comprises three display elements 12, marked as a, b, c. In the embodiment shown, display element 12 a operates operating element 32 a, e.g. by reading data - e.g. measured values - from sensor 32 a. The value read from sensor 32 a may be one single value, e.g. a current temperature, and/or a set of measured values, e.g. a time-series of temperatures. Analogously, data read from sensor 32 b may be one single value, e.g. one register entry, and/or a set of entries, e.g. of a plurality of internal registers. A value sent from display element 12 c to operating element 32 c may be one or more values that steer the heating element.

**Fig. 2** shows schematically an example for providing a controlling frontend 10 according to an embodiment. One input for generating the controlling frontend 10 may be an operational frame 14. The operational frame 14 may be based on a companion specification. Another input may be a field device specification 24. The field device specification 24 may comprise a structured set of field device attributes 22, which are related to the operating elements 32. The field device specification 24 may be part of a database 50. The database 50 may comprise a plurality of field device specifications 24 - e.g. of a plurality of field devices 30 - and/or further data. The database 50 may be located on the field device 30, on the operating device 40, on a server, and/or on an aggregation server.

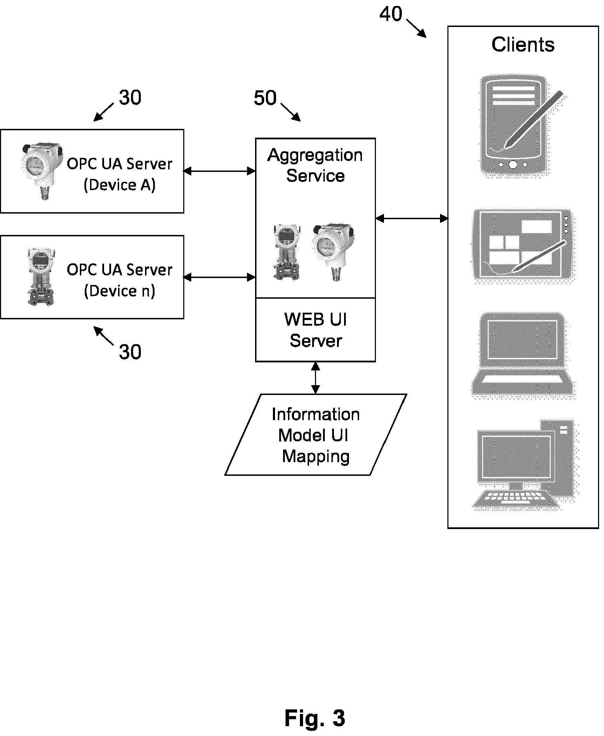

**Fig. 3** shows schematically an example for an aggregating service according to an embodiment. The aggregating service may run on a database 50. The database 50 may comprise a plurality of field device specifications 24 (see **Fig. 2**) - e.g. of a plurality of field devices 30 - and/or further data. This enables an Aggregation Service to provide additional usability services based, e.g., on a web server interface. This may offer web-technology-based user dialogs, which may run on Clients or operating devices 40, to support users in their interaction with an OPC UA connected device. The user dialogs may run on a controlling frontend 10 on the operating devices 40. The controlling frontend 10 may be generated from OPC UA Server implemented Address Spaces, which applies knowledge from specified information models (OPC UA Specifications), as it envisions using configuration data to control the rendering process regarding layout and/or graphical styles, such as fonts, colours, etc. Furthermore, to be able also to support OPC UA Applications that do not follow a standardized information model, it may, additionally or as an alternative, be possible to manage specific UI (user interface) configuration data per OPC UA Server instance. The UI configuration concept may include a cascaded approach that allows OPC UA Server Instance specific extensions on top of the Information Model based Ul configuration rules. Additionally or as an alternative, the usability services in exceptional cases may be as limited as providing a simple WEB API (such as RESTful services) to web clients, which in turn implement the user dialogs. Advantageously, at least some implementations of this concept only require widespread WEB technologies and interfaces, so that no OPC UA-specifics have to be known in order to configure OPC UA devices and thereby, configure or re-configure the monitoring and control of an industrial process.

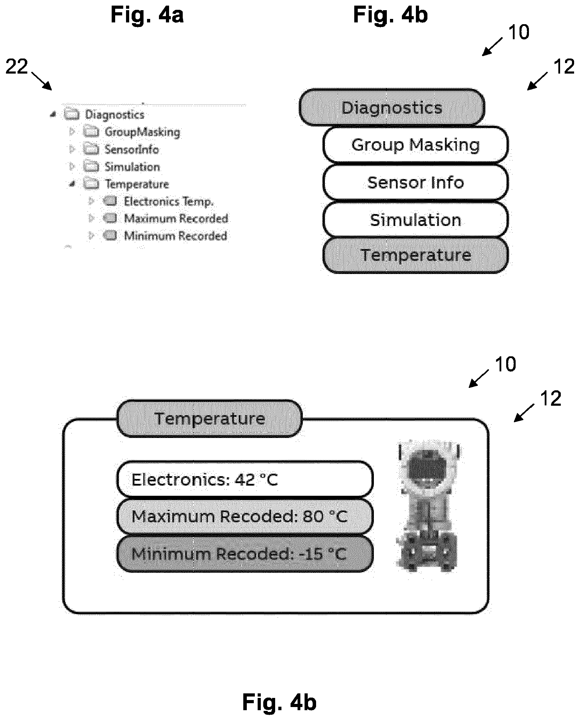

**Fig. 4a** to **4c** shows schematically an example for an aggregated user interface according to an embodiment. **Fig. 4a** shows a representation of (a part of) a structured set of field device attributes 22. In the abstraction level shown, entries "Group Masking", "Sensor Info", "Simulation", and "Temperature" are available. **Fig. 4b** shows how these field device attributes 22 have been transformed into a structured set of display elements 12, as displayed on a controlling frontend 10. Activating the display element "Temperature" - i.e. touching or clicking, depending on the kind of display used in operating device 40 - may lead to a look of the controlling frontend 10 as shown in **Fig. 4c****.** This figure shows a structured set of display elements 12, displayed as a sub-menu of "Temperature".

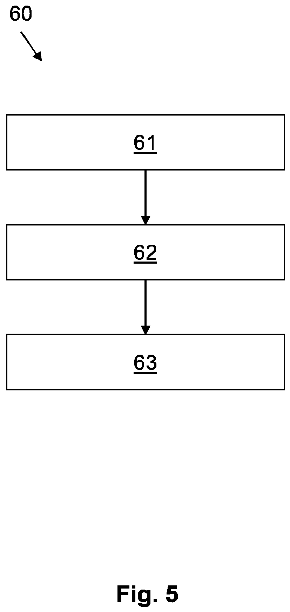

**Fig. 5** shows a flow diagram 60 according to an embodiment. A method for providing a controlling frontend 10 (see previous figures) for an operating device 40 comprises the steps 61 to 63. In a step 6, an operational frame 14 is provided, wherein the operational frame 14 is based on a companion specification. In a step 62 a field device specification 24 is read from a database 50. The field device specification 24 comprises a structured set of field device attributes 22, which are related to the operating elements 32. In a step 63, a structured set of display elements 12 for the controlling frontend 10 is generated, based on the field device specification 24 and the operational frame 14. At least some of the display elements 12 of the controlling frontend 10 are connected to the operating elements 32 of the field device 30.

### List of Reference Symbols

- 10: controlling front-end
- 12: display elements
- 14: operational frame
- 22: device attributes
- 24: field device specification
- 30: field device
- 32: operating elements
- 40: operating device
- 50: database
- 60: flow diagram
- 61 - 63: steps

## Claims

1. A method for providing a controlling frontend (10) for an operating device (40) configured for operating a field device (30) by means of operating elements (32) of the field device (30), the method comprising the steps of:
providing an operational frame (14), wherein the operational frame (14) is based on a companion specification;
reading a field device specification (24) from a database (50), wherein the field device specification (24) comprises a structured set of field device attributes (22), which are related to the operating elements (32); and
generating, based on the field device specification (24) and the operational frame (14), a structured set of display elements (12) for the controlling frontend (10),
wherein at least some of the display elements (12) of the controlling frontend (10) are connected to the operating elements (32) of the field device (30).

2. The method of claim 1,
wherein the operating elements (32) are at least one of: a sensor, an actuator, and/or a register entry.

3. The method of claim 1 or 2,
wherein the operational frame (14) and/or the companion specification comprises a specification of a layout and/or of a graphical style of the display elements (12).

4. The method of any one of the preceding claims,
wherein the display elements (12) are hierarchically structured.

5. The method of any one of the preceding claims,
wherein the address space of the device is compliant with a companion specification according to OPC 30081, OPC 10000-100, OPC Unified Architecture for IEC61850, MDIS OPC UA Companion Specification, OPC Unified Architecture for Analyzer Devices (ADI) and/or another companion specification and/or is compliant with an aggregated service.

6. The method of any one of the preceding claims,
wherein at least a part of the field device specification (24) and/or the field device attributes (22) is compliant with a Unified Architecture of Open Platform Communications, OPC UA.

7. The method of any one of the preceding claims,
wherein activating one of the display elements (12) is related to a display element action, wherein the display element action comprises at least one of:
displaying a sub-menu,
steering an operating element (32) of the field device (30),
performing an authentication, and/or
performing a NOP-operation.

8. The method of any one of the preceding claims,
wherein the display elements (12) of the controlling frontend (10) being connected to the operating elements (32) of the field device (30) requires an authorization of the controlling frontend (10) and/or of the operating device (40).

9. The method of any one of the preceding claims,
wherein the operating device (40) is a smartphone, tablet, a laptop, a specialized device, and/or another type of mobile device, a stationary device, and/or a server.

10. The method of any one of the preceding claims,
wherein the database (50) is located on the field device (30), on the operating device (40), on a server, and/or on an aggregation server.

11. A program element for executing the method of any one of the preceding claims, when running the program element on a processing unit.

12. A computer-readable storage medium where a computer program according to claim 11 is stored on.

13. An aggregation server, configured for aggregating information of a plurality of field devices (30), wherein the information comprises a structured set of field device attributes (22) and usability services for the field devices (30).

14. The aggregation server of claim 13, wherein the aggregation server is compliant with IEC 62541.1.

15. Use of a method according to any one of the claims 1 to 10 for controlling field devices (30) of an industrial automation system and/or for providing a controlling frontend (10) for the field devices (30).
